# EUROPÄISCHE PATENTSCHRIFT

(11) **EP 2 195 560 B1**
(45) Veröffentlichungstag und Bekanntmachung des Hinweises auf die Patenterteilung: **19.10.2011**
(21) Anmeldenummer: 08803053.1
(22) Anmeldetag: 15.08.2008
(51) Int. Cl.: F16H 61/42, F16H 61/46

(54) **VERSTELLVORRICHTUNG DES HUBVOLUMENS VON HYDRAULISCHEN KOLBENMASCHINEN**
DEVICE FOR ADJUSTING THE STROKE VOLUME OF HYDRAULIC PISTON MACHINES
DISPOSITIF DE RÉGLAGE DE LA CYLINDRÉE DE MOTEURS À PISTONS HYDRAULIQUES

(30) Priorität: 02.10.2007 DE 102007047194; 02.10.2007 DE 102007047193; 02.10.2007 DE 102007047195; 04.10.2007 DE 102007047513
(43) Veröffentlichungstag der Anmeldung: 16.06.2010
(73) Patentinhaber: ZF Friedrichshafen AG, 88038 Friedrichshafen (DE)
(72) Erfinder: LEGNER, Jürgen, 88048 Friedrichshafen (DE)
(86) Internationale Anmeldenummer: PCT/EP2008/060761
(87) Internationale Veröffentlichungsnummer: WO 2009/047039

(56) Entgegenhaltungen:
- US-A- 2 583 656
- US-A- 2 808 737
- US-A- 3 601 981
- US-A- 3 834 164

## Beschreibung

Die Erfindung bezieht sich auf eine Verstellvorrichtung des Hubvolumens von hydraulischen Kolbenmaschinen nach der im Oberbegriff von Anspruch 1 näher definierten Art.

Hydraulische Kolbenmaschinen werden beispielsweise bei hydrostatisch-mechanischen Leistungsverzweigungsgetrieben für den hydraulischen Leistungszweig verwendet, um die Übersetzung des Getriebes stufenlos zu verändern. Hierzu benötigen die hydraulischen Kolbenmaschinen Verstellvorrichtungen, mittels welcher das Hubvolumen der Kolbenmaschinen verstellt werden kann.

Die DE 42 06 023 A1 offenbart ein stufenloses hydrostatischmechanisches Leistungsverzweigungsgetriebe mit hydraulischen Kolbenmaschinen und Verstellvorrichtungen, mittels welcher die Kolbenmaschinen stufenlos verstellt werden können. Die Verstellvorrichtung umfaßt Steuerorgane, mittels welcher die Kolbenmaschinen angesteuert werden können. Um das System vor Überlastung zu schützen, weist die Verstellvorrichtung ein Hochdruckbegrenzungsventil auf, mittels welchem der maximale Druck begrenzt werden kann. Bei Aktivierung des Hochdruckbegrenzungsventils wird die Energie in Wärme umgewandelt, welche über einen Kühler abgegeben werden muß.

Die US 2 583 656 A offenbart eine Verstellvorrichtung nach dem Oberbegriff des Hauptanspruchs.

Der vorliegenden Erfindung liegt die Aufgabe zugrunde, eine Verstellvorrichtung des Hubvolumens von hydraulischen Kolbenmaschinen zu schaffen, welche einfach aufgebaut ist und das System vor Überhitzung schützt.

Die Aufgabe wird mit einer, auch die kennzeichnenden Merkmale des Hauptanspruchs aufweisenden, gattungsgemäßen Verstellvorrichtung gelöst.

Die Verstellvorrichtung weist eine erste und eine zweite Kolbenmaschine auf, wobei die Kolbenmaschinen in Schrägachsen-Bauart ausgeführt sind. Kolbenmaschinen in Schrägachsen-Bauart zeichnen sich durch sehr gute Wirkungsgrade aus. Die beiden Kolbenmaschinen sind benachbart zueinander angeordnet und weisen ein gemeinsames Bauteil, ein sogenanntes Joch, auf, mittels welchem die beiden Kolbenmaschinen in ihrem Hubvolumen gemeinsam verstellt werden können. Die Kolbenmaschinen weisen Arbeitsleitungen auf, über welche die beiden Kolbenmaschinen miteinander verbunden sind. Dadurch bilden die Kolbenmaschinen einen sogenannten geschlossenen Kreislauf. Das gemeinsame Bauteil zum Verstellen des Hubvolumens der Kolbenmaschinen ist so angeordnet, dass in einer ersten Stellung des gemeinsamen Bauteils die erste hydraulische Kolbenmaschine auf ein kleines oder kein Hubvolumen und die zweite hydraulische Kolbenmaschine auf ein großes oder maximales Hubvolumen verstellt ist. Die erste hydraulische Kolbenmaschine arbeitet beispielsweise als Pumpe und fördert Druckmittel zur zweiten Kolbenmaschine, welche in diesem Betriebszustand als Motor arbeitet. Im anderen Betriebszustand arbeitet die zweite Kolbenmaschine als Pumpe und die erste Kolbenmaschine als Motor. Verstellt man das gemeinsame Bauteil aus seiner ersten Stellung in Richtung zweite Stellung, so vergrößert sich das Hubvolumen der ersten Kolbenmaschine, beispielsweise der Pumpe, und das Hubvolumen der zweiten Kolbenmaschine, beispielsweise des Motors, wird gleichzeitig verkleinert. Beim Betrieb in der zweiten Stellung des gemeinsamen Bauteils weist die erste Kolbenmaschine ihr maximales Hubvolumen auf und fördert beim Betrieb als Pumpe somit einen maximalen Volumenstrom, und die zweite Kolbenmaschine weist ihr minimales Hubvolumen auf und erzeugt somit beim Betrieb als Motor eine hohe Abtriebsdrehzahl. Das gemeinsame Bauteil läßt sich durch Mittel zum Verstellen, wie beispielsweise einem hydraulischen Zylinder, von einer ersten Stellung in Richtung zweite Stellung oder von einer zweiten Stellung in Richtung erste Stellung verstellen. Dadurch kann beispielsweise ein Fahrer eines Fahrzeugs über eine Einrichtung zur manuellen Vorgabe, beispielsweise über ein Fahrpedal, welches mechanisch oder elektrisch ein Ventil ansteuert, den Fahrerwunsch an die Mittel zum Verstellen des gemeinsamen Bauteils weitergeben, wodurch das gemeinsame Bauteil in Abhängigkeit des Fahrerwunsches, und somit der Betätigung der Einrichtung zur manuellen Vorgabe, verstellt wird. Möchte der Fahrer eine höhere Abtriebsdrehzahl in der zweiten Kolbenmaschine, so wird das gemeinsame Bauteil in Richtung zweiter Stellung verstellt. Möchte der Fahrer eine geringere Abtriebsdrehzahl, so wird das gemeinsame Bauteil in Richtung erster Stellung verstellt. Steigt der Fahrwiderstand, so besteht die Möglichkeit, dass ein zulässiger Druck in den Arbeitsleitungen zwischen der ersten und zweiten Kolbenmaschine überschritten wird.

Erfindungsgemäß wird das gemeinsame Bauteil bei Überschreiten eines zuvor definierten Druckniveaus in Richtung erster Stellung verstellt, wodurch die erste Kolbenmaschine, beispielsweise die Pumpe, in Richtung kleineres Hubvolumen verstellt wird, und die zweite Kolbenmaschine, beispielsweise der Motor, in Richtung größeres Hubvolumen verstellt wird, wodurch der Druck in den Arbeitsleitungen sinkt. Dieses zuvor definierte Druckniveau liegt unterhalb eines maximal zulässigen Druckniveaus, bei welchem Hochdruckbegrenzungsventile öffnen, wodurch eine Überhitzung des Systems verhindert wird, da die Energie nicht über die Hochdruckbegrenzungsventile in Wärme umgewandelt wird.

In einer weiteren Ausgestaltungsform der Erfindung besteht die Möglichkeit, über eine weitere Einrichtung zur manuellen Vorgabe ein noch geringeres maximales Druckniveau vorzugeben, wodurch das gemeinsame Bauteil schon bei einem geringeren Druckniveau in Richtung erster Stellung verstellt wird. Dadurch ist es möglich, den maximal zulässigen Druck stufenlos zu beeinflussen. Bei Verwendung eines doppelt wirkenden hydraulischen Zylinders, welcher über Hochdruck auf der Stangenseite des Zylinders in seine Ausgangsposition verstellt wird und in dieser Ausgangsposition mit dem gemeinsamen Bauteil in seiner ersten Stellung verbunden ist, besteht die Möglichkeit, durch Druckbeaufschlagung dieses hydraulischen Zylinders auf der Bodenseite mit Druck einer Druckmittelquelle das gemeinsame Bauteil von der ersten Stellung in Richtung zweite Stellung zu bewegen. Beim Verbinden der Bodenseite des hydraulischen Zylinders mit einem Druckmittelreservoir bewegt sich das gemeinsame Bauteil in Richtung erster Stellung zurück. Die Einrichtung zur manuellen Vorgabe kann ein weiteres Ventil aufweisen, welches den Druckmittelzylinder mit der Druckmittelquelle oder mit dem Druckmittelreservoir, je nach Fahrerwunsch, verbindet, und so die Stellung des gemeinsamen Bauteils bestimmt, wodurch die Abtriebsdrehzahl der Kolbenmaschine festgelegt wird.

Somit ist es möglich, über die Einrichtung zur manuellen Vorgabe das gemeinsame Bauteil im Sinne einer Drehzahlsteuerung anzusteuern und über die weitere Einrichtung zur manuellen Vorgabe eine Begrenzung des Druckniveaus durch Verstellung des gemeinsamen Bauteils in Richtung erste Stellung herbeizuführen.

Hierbei ist das gemeinsame Bauteil so mit einem Sensor verbunden, dass eine elektronische Steuereinheit die Position des gemeinsamen Bauteils ermitteln kann und mindestens ein Sensor den Druck in der Arbeitsleitung bzw. in der Hydraulikeinheit ermittelt, und die elektronische Steuereinheit aus diesem Druck und der Stellung des gemeinsamen Bauteils in Abhängigkeit von einer manuellen Vorgabe die Verstelleinrichtung des gemeinsamen Bauteils ansteuert.

Durch die Beaufschlagung des Zylinders mit Hochdruck ist es möglich, ohne Verwendung eines Zylinders mit sehr großen Flächen große Verstellkräfte auf das gemeinsame Bauteil zu erzeugen.

Weitere Merkmale sind der Figuren-Beschreibung zu entnehmen.

Es zeigen:
- Fig. 1: ein Hydraulikschema der Verstellvorrichtung und

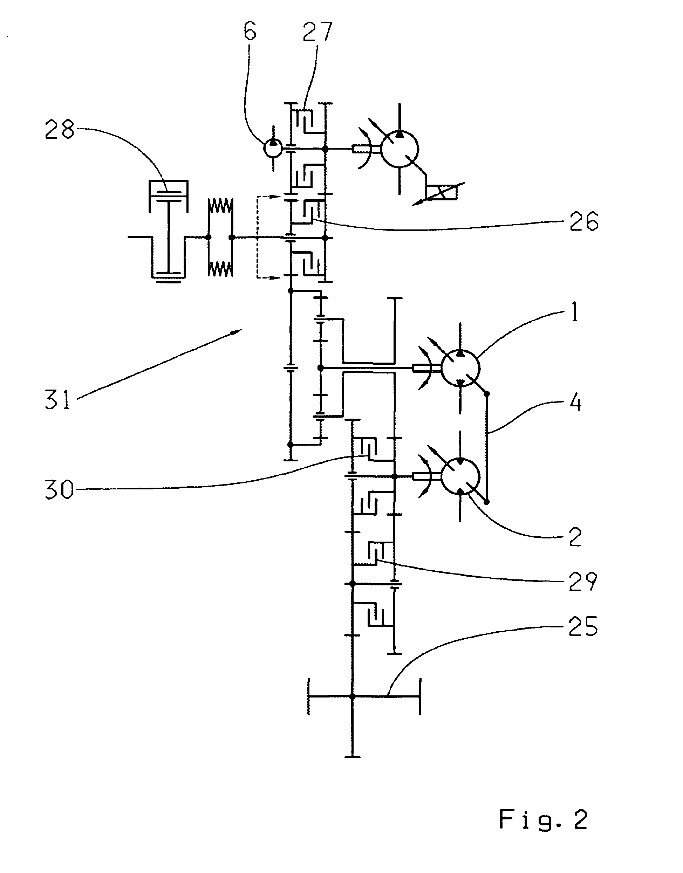

- Fig. 2: ein Getriebeschema eines hydrostatisch-mechanischen Leistungsverzweigungsgetriebes.

### Fig. 1:

Die Verstellvorrichtung weist eine erste Kolbenmaschine 1 in Schrägachsen-Bauart, welche in einem Betriebszustand, beispielsweise als Pumpe, arbeitet, und eine zweite Kolbenmaschine 2 in Schrägachsen-Bauart auf, welche in einem Betriebszustand, beispielsweise als Motor, arbeitet. Die erste Kolbenmaschine 1 und die zweite Kolbenmaschine 2 sind über Arbeitsleitungen 3 miteinander verbunden. Das Hubvolumen der ersten Kolbenmaschine 1 und der zweiten Kolbenmaschine 2 wird über ein gemeinsames Bauteil 4 verstellt. Ein doppelt wirkender hydraulischer Zylinder 5 ist mit dem gemeinsamen Bauteil 4 verbunden. Der Zylinder 5 ist an seiner Stangenseite 34 mit der Leitung 16 verbunden, wodurch der Zylinder 5 mit Hochdruck in seine Ausgangstellung verstellbar ist, wenn die Kraft aus dem Druck auf der Stangenseite 34 der Kraft aus dem Druck auf der Bodenseite 33 überwiegt. Im nur stangenseitig druckbeaufschlagten Zustand des hydraulischen Zylinders 5 ist die erste Kolbenmaschine auf kein Hubvolumen verstellt, d. h., wird die erste Kolbenmaschine 1 angetrieben, so fördert sie kein Druckmittel. Die zweite Kolbenmaschine 2 ist im nur stangenseitig druckbeaufschlagten Zustand des hydraulischen Zylinders 5 auf maximales Hubvolumen verstellt. Eine Druckmittelquelle 6 fördert Druckmittel aus einem Druckmittelreservoir 7 in die Leitung 8. Soll das gemeinsame Bauteil 4 aus seiner ersten Stellung bei bodenseitig drucklosem, hydraulischen Zylinder 5 in Richtung zweite Stellung verstellt werden, so wird das Ventil 9 der Einrichtung zur manuellen Vorgabe 10 so umgesteuert, dass Druckmittel von der Leitung 8 in die Leitung 11 fließt. Befindet sich das Ventil 12 nicht in seiner Grundstellung, so gelangt das Druckmittel von der Leitung 32 über die Leitung 13 in den hydraulischen Zylinder 5 auf dessen Bodenseite 33 und verstellt das gemeinsame Bauteil 4 in Richtung zweite Stellung, wodurch das Hubvolumen der ersten Kolbenmaschine 1 sich vergrößert, das Hubvolumen der zweiten Kolbenmaschine 1 sich verringert und Druckmittel über die Arbeitsleitungen 3 von der ersten Kolbenmaschine 1 zur zweiten Kolbenmaschine 2 gefördert wird. Im ducklosen Zustand der Leitung 11 wird das Ventil 12 über die einstellbare Feder 14 in seiner Grundstellung gehalten. Der höhere Druck in den Arbeitsleitungen 3 gelangt über das Wechselventil 15 über die Leitung 16 zum Drucksensor 17. Der Drucksensor 17, in Verbindung mit der elektronischen Steuereinheit 19, steuert das Ventil 9 so an, dass unterhalb dem Öffnungsniveau der Druckbegrenzungsventile 18 das Ventil 12 in seine Grundposition umgesteuert wird, wodurch das Druckmittel der Leitung 13 nicht mehr in den hydraulischen Zylinder 5 gelangt und die Bodenseite 33 des hydraulischen Zylinders 5 mit dem Druckmittelreservoir 7 verbunden wird, wodurch das gemeinsame Bauteil 4 in Richtung erste Stellung verstellt wird, wodurch der Druck in den Arbeitsleitungen 3 wieder sinkt. Indem das Ventil 12 unterhalb des Druckniveaus der Druckbegrenzungsventile 18 umgesteuert wird, bleiben die Druckbegrenzungsventile 18 geschlossen, wodurch der Antrieb vor Überhitzung geschützt bleibt. Fällt der Druck in den Arbeitsleitungen 3 wieder, so wird das Ventil 12 wieder aus seiner Ausgangsposition herausgesteuert, und das Druckmittel der Leitung 13 erreicht wieder den hydraulischen Zylinder 5. Ein Sensor 36 ist so mit dem gemeinsamen Bauteil 4 verbunden, dass dessen Position sensiert werden kann, und über die Steuerleitung 23 dem elektronischen Steuergerät 19 übermittelt wird. Der Sensor 36 kann als berührungsloser Drehwinkelsensor oder als Wegsensor ausgebildet sein. Der elektronischen Steuereinheit 19 ist einerseits der Geschwindigkeitswunsch aus dem Fahrpedal 20 und andererseits ein Drehmomentwunsch aus einer weiteren Einrichtung zur manuellen Vorgabe 22 bekannt. Je nach Vorgabe der weiteren Einrichtung zur manuellen Vorgabe 22 wird ein gewünschtes Druckniveau in den Arbeitsleitungen 3 eingestellt, wodurch in Verbindung aus der Kenntnis des Hubvolumens durch den Sensor 36 und des Druckniveaus durch den Sensor 16 die elektronische Steuereinheit 19 eine gewünschte Antriebsleistung einregeln kann. Beispielsweise kann eine maximale Zugkraft begrenzt werden, bei dessen Überschreitung das gemeinsame Bauteil 4 zurückgeregelt wird. In Verbindung mit der Drehzahlvorgabe aus dem Fahrpedal 20 kann die elektronische Steuereinheit 19 eine stufenlose Leistungseinstellung vornehmen. Hierzu steuert die elektronische Steuereinheit 19 über die Steuerleitung 21 das Ventil 9 an, welches über das Ventil 37 und das Ventil 12 den hydraulischen Zylinder 5 und dadurch das gemeinsame Bauteil 4 ansteuert. Das Ventil 37 und 38 kann auch entfallen, wenn das Ventil 9 so ausgelegt ist, dass es den Druck der Druckmittelquelle 7 direkt verarbeiten kann. Durch diese stufenlose Begrenzung des Hochdrucks kann bei Verwendung der Verstelleinrichtung in einem Mobil-Fahrzeug eine stufenlose Zugkrafteinstellung geschaffen werden. Durch die Einrichtung zur manuellen Vorgabe 10, in Verbindung mit der elektronischen Steuereinheit 19 und dem Sensor 36, kann eine stufenlose Geschwindigkeitseinstellung geschaffen werden. Kombiniert man die stufenlose Geschwindigkeitseinstellung mit der stufenlosen Zugkrafteinstellung durch den Sensor 17, so läßt sich eine stufenlose Leistungsregelung des Fahrzeugs verwirklichen.

### Fig. 2:

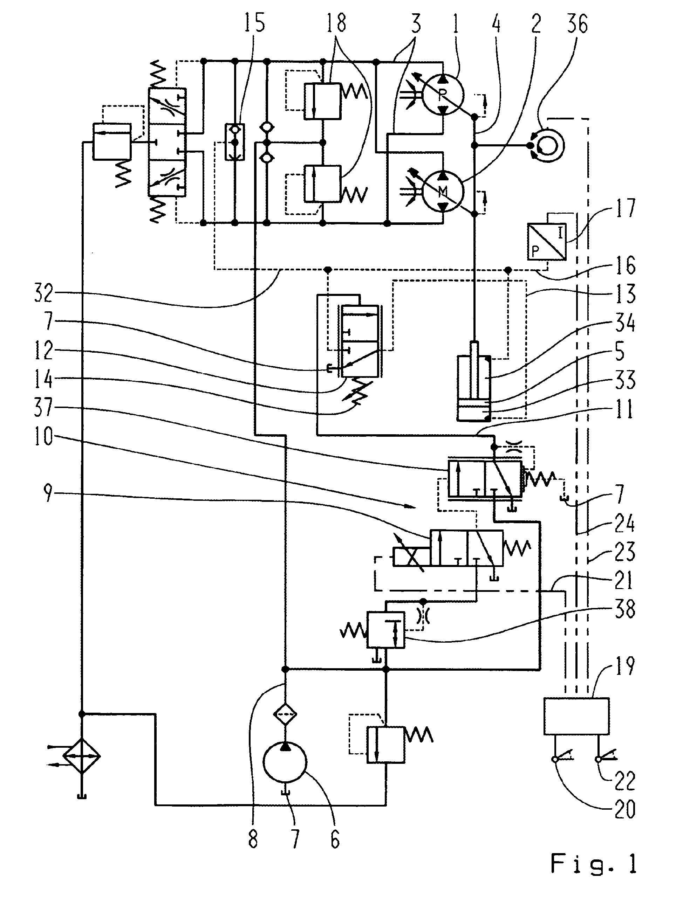

Das hydrostatisch-mechanische Leistungsverzweigungsgetriebe weist eine erste Kolbenmaschine 1 und eine zweite Kolbenmaschine 2 der in Fig. 1 beschriebenen Art auf, welche über ein gemeinsames Bauteil 4 im Hubvolumen verstellbar sind. Der Abtrieb 25 ist über eine Kupplung für Vorwärtsfahrt 26 oder eine Kupplung für Rückwärtsfahrt 27 mit dem Antrieb 28 verbindbar. Die Fahrbereiche lassen sich über eine Kupplung 29 und eine Kupplung 30 schalten. Das Summierungsgetriebe 31 summiert den mechanischen und hydraulischen Leistungszweig.

### Bezugszeichen

- 1: erste Kolbenmaschine
- 2: zweite Kolbenmaschine
- 3: Arbeitsleitung
- 4: gemeinsames Bauteil
- 5: hydraulischer Zylinder
- 6: Druckmittelquelle
- 7: Druckmittelreservoir
- 8: Leitung
- 9: Ventil
- 10: Einrichtung zur manuellen Vorgabe
- 11: Leitung
- 12: Ventil
- 13: Leitung
- 14: Feder
- 15: Wechselventil
- 16: Leitung
- 17: Drucksensor
- 18: Druckbegrenzungsventil
- 19: elektronische Steuereinheit
- 20: Fahrpedal
- 21: Steuerleitung
- 22: weitere Einrichtung zur manuellen Vorgabe
- 23: Steuerleitung
- 24: Steuerleitung
- 25: Abtrieb
- 26: Kupplung für Vorwärtsfahrt
- 27: Kupplung für Rückwärtsfahrt
- 28: Antrieb
- 29: Kupplung
- 30: Kupplung
- 31: Summierungsgetriebe
- 32: Leitung
- 33: Bodenseite
- 34: Stangenseite
- 35: Ventil
- 36: Sensor
- 37: Ventil
- 38: Ventil

## Patentansprüche

1. Verstellvorrichtung des Hubvolumens von hydraulischen Kolbenmaschinen in Schrägachsen-Bauart, wobei eine erste Kolbenmaschine (1) benachbart zu einer zweiten Kolbenmaschine (2) angeordnet ist, wobei die beiden Kolbenmaschinen Arbeitsleitungen (3) aufweisen, über welche die beiden Kolbenmaschinen miteinander hydraulisch verbunden sind, und die Kolbenmaschinen verstellbare Achsen aufweisen, welche über ein gemeinsames Bauteil (4) so verbunden sind, dass durch Bewegen des gemeinsamen Bauteils (4) die verstellbaren Achsen gemeinsam verstellt werden, wobei in einer ersten Stellung des gemeinsamen Bauteils (4) die erste hydraulische Kolbenmaschine (1) auf ein kleines oder kein Hubvolumen und die zweite hydraulische Kolbenmaschine (2) auf ein großes oder maximales Hubvolumen verstellt ist, und in einer zweiten Stellung des gemeinsamen Bauteils (4) die erste hydraulische Kolbenmaschine (1) auf ein großes oder maximales Hubvolumen und die zweite hydraulische Kolbenmaschine (2) auf ein kleines oder minimales Hubvolumen verstellt ist, mit Mittel zum Verstellen (5) des gemeinsamen Bauteils (4), wobei das gemeinsame Bauteil (4) in Abhängigkeit einer Drehzahlvorgabe (20), je nach Vorgabe, in Richtung erster Stellung oder zweiter Stellung verstellbar ist, und das gemeinsame Bauteil (4), unabhängig von der Drehzahlvorgabe (20), in Richtung erster Stellung verstellbar ist, wenn ein zuvor definierter Druck in einer der Arbeitsleitungen (3) überschritten wird, **gekennzeichnet dadurch, dass** eine Elektronische Steuereinheit (19) in Abhängigkeit der Stellung des gemeinsamen Bauteils und in Abhängigkeit des Drucks in der Arbeitsleitung und in Abhängigkeit einer Geschwiridigkeitsvorgabe die Verstellvorrichtung des gemeinsamen Bauteils ansteuert.

2. Verstellvorrichtung nach Anspruch 1, **dadurch gekennzeichnet, dass** eine weitere Einrichtung zur manuellen Vorgabe (22) vorhanden ist, mittels welcher das gemeinsame Bauteil (4) bei Betätigung der weiteren Einrichtung (22) in Abhängigkeit des Drucks in den Arbeitsleitungen (3) und in Abhängigkeit der Betätigung der weiteren manuellen Vorgabe (22) in Richtung erster Stellung verstellbar ist.

3. Verstellvorrichtung nach Anspruch 1, **dadurch gekennzeichnet, dass** das Mittel zur Verstellung des gemeinsamen Bauteils (5) als doppelt wirkender Hydraulikzylinder ausgebildet ist, welcher in seiner Grundstellung bei stangenseitigem Druck das gemeinsame Bauteil (4) in der ersten Stellung hält und bei Druckbeaufschlagung auf der Bodenseite (33) das gemeinsame Bauteil (4) in Richtung zweite Stellung verstellt.

4. Verstellvorrichtung nach Anspruch 1, **dadurch gekennzeichnet, dass** das gemeinsame Bauteil mit einem Sensor zur Positionserfassung (36) verbunden ist.

5. Verstellvorrichtung nach Anspruch 4, **dadurch gekennzeichnet, dass** der Druck in der Arbeitsleitung (3) durch einen Drucksensor (17) ermittelt wird.

6. Verstellvorrichtung nach Anspruch 1, **dadurch gekennzeichnet, dass** die elektronische Steuereinheit (19) das gemeinsame Bauteil oberhalb eines zuvor definierten Drucks in den Arbeitsleitungen (3) in Richtung Grundstellung einregelt

7. Verstellvorrichtung nach Anspruch 1, **dadurch gekennzeichnet, dass** die erste Kolbenmaschine (1) und die zweite Kolbenmaschine (2) im Sinne einer Stufenlosen Leistungsregelung angesteuert werden.

8. Verstellvorrichtung nach Anspruch 1, **dadurch gekennzeichnet, dass** die erste Kolbenmaschine (1) und die zweite Kolbenmaschine (2) in einem hydrostatisch-mechanischen Leistungsverzweigungsgetriebe mit einem hydraulischen und einem mechanischen Zweig angeordnet sind, wobei der hydraulische Zweig mit der ersten Kolbenmaschine (1) und der zweiten Kolbenmaschine (2) in Verbindung steht.

## Claims

1. Device for adjusting the swept volume of hydraulic piston machines of oblique axis construction, wherein a first piston machine (1) is arranged adjacent to a second piston machine (2), wherein the two piston machines have working lines (3) via which the two piston machines are hydraulically connected to one another, and the piston machines have adjustable axles which are connected via a common component (4) such that the adjustable axles are adjusted jointly by a movement of the common component (4), wherein in a first position of the common component (4), the first hydraulic piston machine (1) is adjusted to a small or zero swept volume and the second hydraulic piston machine (2) is adjusted to a large or maximum swept volume, and in a second position of the common component (4), the first hydraulic piston machine (1) is adjusted to a large or maximum swept volume and the second hydraulic piston machine (2) is adjusted to a small or minimal swept volume, having means for adjusting (5) the common component (4), wherein the common component (4) can be adjusted in the direction of the first position or second position as a function of a rotational speed preset (20), according to what is preset, and the common component (4) can be adjusted in the direction of the first position regardless of the rotational speed preset (20) if a predefined pressure is exceeded in one of the working lines (3), **characterized in that** an electronic control unit (19) activates the adjusting device of the common component as a function of the position of the common component and as a function of the pressure in the working line and as a function of a speed preset.

2. Adjusting device according to Claim 1, **characterized in that** a further device for manual presetting (22) is provided by means of which the common component (4), upon actuation of the further device (22), can be adjusted in the direction of the first position as a function of the pressure in the working lines (3) and as a function of the actuation of the further manual preset (22).

3. Adjusting device according to Claim 1, **characterized in that** the means for adjusting the common component (5) is designed as a double-acting hydraulic cylinder which, in its basic position, if a pressure is acting at the rod side, holds the common component (4) in the first position and, in the event of pressurization on the base side (33), adjusts the common component (4) in the direction of the second position.

4. Adjusting device according to Claim 1, **characterized in that** the common component is connected to a sensor for position detection (36).

5. Adjusting device according to Claim 4, **characterized in that** the pressure in the working line (3) is determined by means of a pressure sensor (17).

6. Adjusting device according to Claim 1, **characterized in that** the electronic control unit (19) adjusts the common component in a regulated manner in the direction of a base position when a pressure in the working lines (3) is above a predefined value.

7. Adjusting device according to Claim 1, **characterized in that** the first piston machine (1) and the second piston machine (2) are activated so as to provide continuously variable power regulation.

8. Adjusting device according to Claim 1, **characterized in that** the first piston machine (1) and the second piston machine (2) are arranged in a hydrostatic-mechanical power split transmission having a hydraulic branch and having a mechanical branch, wherein the hydraulic branch is connected to the first piston machine (1) and to the second piston machine (2) .

## Revendications

1. Dispositif de réglage de la cylindrée de machines à pistons hydrauliques de construction à axes obliques, une première machine à piston (1) étant disposée à côté d'une deuxième machine à piston (2), les deux machines à piston présentant des conduites de travail (3) par le biais desquelles les deux machines à piston sont connectées hydrauliquement l'une à l'autre, et les machines à piston présentant des axes réglables, qui sont connectés par le biais d'un composant commun (4) de telle sorte que par déplacement du composant commun (4), les axes réglables soient réglés en commun, la première machine à piston hydraulique (1) étant réglée à une petite cylindrée ou cylindrée nulle et la deuxième machine à piston hydraulique (2) étant réglée à une grande cylindrée ou cylindrée maximale dans une première position du composant commun (4), et dans une deuxième position du composant commun (4), la première machine à piston hydraulique (1) étant réglée à une grande cylindrée ou cylindrée maximale et la deuxième machine à piston hydraulique (2) étant réglée à une petite cylindrée ou cylindrée nulle, le dispositif de réglage comprenant des moyens pour régler (5) le composant commun (4), le composant commun (4) pouvant être réglé en fonction d'une valeur de régime prescrite (20), selon cette valeur prescrite dans le sens de la première position ou de la deuxième position, et le composant commun (4), indépendamment de la valeur de régime prescrite (20), pouvant être réglé dans le sens de la première position lorsqu'une pression définie préalablement dans l'une des conduites de travail (3) est dépassée, **caractérisé en ce qu'**une unité de commande électronique (19) commande le dispositif de réglage du composant commun en fonction de la position du composant commun et en fonction de la pression dans la conduite de travail et en fonction d'une valeur de vitesse prescrite.

2. Dispositif de réglage selon la revendication 1, **caractérisé en ce qu'**il est prévu un dispositif supplémentaire pour fournir une valeur prescrite manuelle (22), au moyen duquel le composant commun (4), lors de l'actionnement du dispositif supplémentaire (22), peut être déplacé dans le sens de la première position en fonction de la pression dans les conduites de travail (3) et en fonction de la commande de la valeur prescrite manuelle supplémentaire (22).

3. Dispositif de réglage selon la revendication 1, **caractérisé en ce que** le moyen de réglage (5) du composant commun est réalisé sous forme de cylindre hydraulique à double action, qui, dans sa position de base, avec la pression du côté de la tige, maintient le composant commun (4) dans la première position, et en cas de sollicitation par pression du côté du fond (33), déplace le composant commun (4) dans le sens de la deuxième position.

4. Dispositif de réglage selon la revendication 1, **caractérisé en ce que** le composant commun est connecté à un capteur de détection de position (36).

5. Dispositif de réglage selon la revendication 4, **caractérisé en ce que** la pression dans la conduite de travail (3) est détectée par un capteur de pression (17).

6. Dispositif de réglage selon la revendication 1, **caractérisé en ce que** l'unité de commande électronique (19) règle le composant commun au-dessus d'une pression définie préalablement dans les conduites de travail (3) dans le sens de la position de base.

7. Dispositif de réglage selon la revendication 1, **caractérisé en ce que** la première machine à piston (1) et la deuxième machine à piston (2) sont commandées dans le sens d'une régulation de puissance en continu.

8. Dispositif de réglage selon la revendication 1, **caractérisé en ce que** la première machine à piston (1) et la deuxième machine à piston (2) sont disposées dans une transmission à répartition de puissance hydrostatique-mécanique, avec une branche hydraulique et une branche mécanique, la branche hydraulique étant en liaison avec la première machine à piston (1) et la deuxième machine à piston (2).
